# EUROPÄISCHE PATENTSCHRIFT

(11) **EP 2 406 097 B1**
(45) Veröffentlichungstag und Bekanntmachung des Hinweises auf die Patenterteilung: **02.05.2018**
(21) Anmeldenummer: 10701814.5
(22) Anmeldetag: 25.01.2010
(51) Int. Cl.: B60K 35/00

(54) **INSTRUMENTENTAFEL MIT EINER ANZEIGE- UND BEDIENKOMPONENTE**
INSTRUMENT PANEL WITH DISPLAY COMPONENT AND OPERATION COMPONENT
TABLEAU DE BORD AVEC UN COMPOSANT D'AFFICHAGE ET COMPOSANT DE COMMANDE

(30) Priorität: 09.03.2009 DE 102009011709
(43) Veröffentlichungstag der Anmeldung: 18.01.2012
(73) Patentinhaber: Volkswagen Aktiengesellschaft, 38440 Wolfsburg (DE)
(72) Erfinder: HAHN-HEINZE, Joachim, 38102 Braunschweig (DE); NATTERER, Leonard, 38106 Braunschweig (DE); POSCHWATTA, Nils, 38100 Braunschweig (DE)
(86) Internationale Anmeldenummer: PCT/EP2010/000414
(87) Internationale Veröffentlichungsnummer: WO 2010/102694

(56) Entgegenhaltungen:
- EP-A1- 1 905 635
- DE-A1-102007 036 422
- US-A- 6 093 977
- US-B1- 7 325 852
- US-B1- 7 363 148

## Beschreibung

Die Erfindung betrifft eine Instrumententafel, insbesondere für ein Kraftfahrzeug, welche mindestens eine Anzeige- und Bedieneinheit umfasst, die mindestens ein Anzeige- und Bedienelement aufweist.

Instrumententafeln von Personenkraftwagen oder anderen Kraftfahrzeugen sind mit einer Vielzahl von Anzeigeinstrumenten (wie Tachometer mit Kilometerzähler, Drehzahlmesser, Kühlmitteltemperatur- und Kraftstoffanzeige, Uhr, Kontrollleuchten für Fahrtrichtungsanzeiger, Motorölstand, Batterieladezustand, Fernlicht oder dergleichen), Bedienelementen (wie Kippschaltern für Fahrzeugbeleuchtung, Warnblinkanlage oder Heckscheibenheizung, Regelschiebern oder -schaltern zur Regelung der Temperatur und Luftverteilung einer Belüftungsanlage oder dergleichen) sowie mit den im vorderen Teil des Kraftfahrzeugs positionierten Ausströmerdüsen der Belüftungsanlage ausgestattet. Der dem Innenraum zugewandte Korpus dieser Instrumententafeln weist daher viele Winkel und Ecken in seiner Kunststoffoberfläche auf, die das optische Erscheinungsbild der Instrumententafel beeinträchtigen.

Ferner wird zumindest ein Teil der für die Anzeige- und Bedienelemente vorgesehenen Aussparungen im Korpus der Instrumententafeln gewöhnlich durch Fugen begrenzt, die senkrecht oder horizontal zur Oberfläche der Instrumententafel verlaufen und daher vom Innenraum aus sichtbar sind, wodurch sich ebenfalls eine Beeinträchtigung eines einheitlichen, optischen Erscheinungsbildes ergibt.

Als Lösung, um die technischen und designerischen Freiheitsgrade für die Ausbildung einer Instrumententafel zu erhöhen, sind bereits einzelne von einer Instrumententafel abgesetzte Anzeigeinstrumente bekannt, die beispielsweise in der DE 10 2006 047 020 A1 beschrieben werden. Die Druckschrift beschreibt eine Informationsanzeige-Baueinheit für Kraftfahrzeuge, welche einen Instrumentenblock und eine Halterungseinheit umfasst. Die Halterungseinheit trägt den Instrumentenblock an einer vorwärtigen Stelle einer Instrumententafel in Richtung des Innenraumes des Fahrzeuges. Der Instrumentenblock kann dabei hinsichtlich der Halterungseinheit ausgerichtet werden, um optimale Sicht- und Sichtbarkeitsverhältnisse für den Fahrer des Fahrzeuges zu erreichen.

Ausgehend hiervon liegt der Erfindung die Aufgabe zugrunde, eine Instrumententafel dahingehend zu verbessern, dass eine Anordnung und Gestaltung einer Vielzahl von Anzeige- und Bedienelementen variabel und ohne großen Aufwand unter Zurverfügungstellung der oben genannten gewünschten Freiheitsgrade für die Ausbildung der Instrumententafel möglich ist.

Bekannt sind Instrumententafeln, insbesondere für ein Kraftfahrzeug, die einen Korpus aufweisen auf dem oder in dem Anzeige- und Bedienelemente angeordnet sind. Mindestens ein Anzeige- und Bedienelement oder mehrere Anzeige- und Bedienelementen stellen eine Anzeige-und Bedieneinheit dar.

Dabei sind die Anzeige- und Bedienelemente entweder (wie in der DE 198 07 309 A1) direkt in die Instrumententafel eingesetzt oder (wie in der DE 10 2006 047 020 A1) einzelne, vor die Instrumententafel gesetzte Anzeige- und Bedienelemente.

Das Dokument US7363 148B1 offenbart den Oberbegriff des Anspruchs 1.

Ausgehend von diesem Stand der Technik geht die Erfindung einen völlig neuen Weg, gemäß Anspruch 1. Dadurch sind einerseits sowohl bei der Gestaltung der Instrumententafel als auch bei der Gestaltung der Anzeige- und Bedienkomponente und somit der Anordnung der in der Anzeige- und Bedienkomponente ausgeführten Anzeige-und Bedieneinheiten designerische und technische Belange unabhängig voneinander berücksichtigbar. Andererseits sind aber auch hinsichtlich der verschiedenen Kundenwünsche technische und designerische Freiheitsgrade geschaffen, so dass die Instrumententafel und die auf oder in den Korpus der Instrumententafel auf- oder eingesetzte Anzeige- und Bedienkomponente in ihrer Farbe und/oder ihrer Oberflächenbeschaffenheit leicht aufeinander abgestimmt werden können. Ein weiterer großer Vorteil ist die einfache Montage der Anzeige- und Bedienkomponente mit seiner mindestens einen Anzeige- und Bedieneinheit auf oder in dem Korpus der Instrumententafel.

In weiterer bevorzugter Ausgestaltung umfasst die Anzeige- und Bedienkomponente ein Unterteil als Grundträger und ein Oberteil als Bedienoberfläche, wobei die Form von Grundträger und/oder Bedienoberfläche unabhängig von der Instrumententafel frei wählbar ist. Grundträger und Oberteil sind miteinander verbunden. Ein reversibles Verklipsen oder Verrasten wird vorgeschlagen.

Oberteil und Unterteil sind aber nicht nur unter Ausbildung der Anzeige- und Bedienkomponente frei wählbar, sondern die Anzeige- und Bedienkomponente insgesamt ist an die Instrumententafel anpassbar, wobei auch die Form der Instrumententafel selbst frei, also unabhängig von der Anzeige- und Bedienkomponente, gestaltbar ist.

Zudem ist bevorzugt, dass die mindestens eine Anzeige- und Bedieneinheit im Innern der Anzeige- und Bedienkomponente an die Form der Anzeige- und Bedienkomponente anpassbar ist.

Besonders von Vorteil ist, dass die mindestens eine Anzeige- und Bedieneinheit hinter der Bedienoberfläche der Anzeige- und Bedienkomponente (eine fugenfreie abgeschlossene Oberfläche der Anzeige- und Bedienkomponente erhaltend) angeordnet ist und dabei hinsichtlich ihrer Position in der Anzeige- und Bedienkomponente (innerhalb einer Serie oder individuell nach Kundenwunsch) beliebig anordbar ist, ohne dass dabei ein Einfluss auf die Ausbildung des Korpus der Instrumententafel besteht.

Bevorzugt weist die Anzeige- und Bedienkomponente mindestens ein programmierbares Display auf. Ferner bevorzugt weist die Anzeige- und Bedienkomponente ein oder mehrere Anzeige- und Bedieneinheiten auf.

In einer beispielhaften Ausführung weist die Anzeige- und Bedienkomponente mindestens einen ersten (mittig zum Fahrer eines Kraftfahrzeuges angeordneten) Anzeige- und Bedienbereich auf, in dem mindestens eine Anzeige- und Bedieneinheit, als ein Kombiinstrument in der Art eines frei programmierbaren Displays, angeordnet ist.

Zudem weist die Anzeige- und Bedienkomponente in einer beispielhaften Ausführung mindestens einen zweiten, rechts vom Fahrer eines Kraftfahrzeuges angeordneten Anzeige- und Bedienbereich auf, in dem mindestens eine Anzeige- und Bedieneinheit für Infotainment und/oder Navigation und/oder Klima- und Belüftüngssteuerung angeordnet ist. Die mindestens eine Anzeige- und Bedieneinheit weist zumeist eine oder mehrere Anzeige- und Bedienelemente auf.

Schließlich weist die Anzeige- und Bedienkomponente mindestens einen dritten, links vom Fahrer eines Kraftfahrzeuges angeordneten, Anzeige- und Bedienbereich auf, in dem mindestens eine Bedieneinheit-Belüftungsanlage einer Klima- und Belüftungsanlage und/oder mindestens eine Bedieneinheit-Licht zur Steuerung und/oder Regelung der Beleuchtungsanlage des Kraftfahrzeuges angeordnet ist.

Die vor oder in dem Korpus der Instrumententafel angeordnete Anzeige- und Bedienkomponente wird im Detail wie folgt ausgestaltet:
In einer ersten Ausführungsform ist das Oberteil der Anzeige- und Bedienkomponente aus einem dünnen, transparenten oder transluzenten Material, insbesondere Kunststoff, ausgebildet, welches auf seiner Außenseite und/oder Innenseite eine Beschichtung aufweist.

Die Beschichtung wird im Bereich der Anzeige- und Bedieneinheiten und im Bereich der, die Anzeige- und Bedieneinheit ausbildenden, Anzeige- und Bedienelemente durch mechanische und/oder chemische, manuelle oder automatische Druck-, Beschichtungs- oder Abtragungsprozesse entfernt und/oder ist von vornherein nicht aufgetragen, wobei innerhalb dieser Prozesse transparente oder transluzente Vollflächen und/oder transparente oder transluzente Symbole erzeugt werden.

In einer bevorzugten Ausführungsform ist das Oberteil der Anzeige- und Bedienkomponente aus einem dünnen, transparenten oder transluzenten Material, insbesondere Kunststoff, ausgebildet, welches auf seiner Oberseite und/oder Innenseite eine Folie aufweist, wobei die Folie in bestimmten Bereichen nicht aufgebracht wird oder in bestimmten Bereichen entfernt wird, wodurch im Bereich der Anzeige- und Bedieneinheiten transparente oder transluzente Vollflächen und/oder transparente oder transluzente Symbole ausbildbar sind.

Dabei sind hinter den transparenten oder transluzenten Vollflächen der Anzeige- und Bedienkomponente frei programmierbare Displays, beispielsweise ein Touchscreen, angeordnet oder hinter den transparenten oder transluzenten Symbolen der Anzeige- und Bedienkomponente sind die Leuchtmittel aufweisenden Anzeige- und Bedieneinheiten angeordnet, wodurch die Anzeige- und Bedieneinheiten in der Anzeige- und Bedienkomponente durch das transparente oder transluzente Material des Oberteiles der Anzeige- und Bedienkomponente beleuchtet sind.

Davon ausgehend, werden die Anzeige- und Bedieneinheiten in einer bevorzugten ersten Ausbildung aus mindestens einem kapazitiven Anzeige- und Bedienelement (als kapazitive Taster) oder in einer anderen zweiten bevorzugten Ausbildung aus mindestens einem kapazitiven Schieberegler (so genannte Slider) und in einer dritten bevorzugten Ausbildung als eine Kombination aus einem kapazitiven Taster und einem kapazitivem Schieberegler ausgestaltet.

Die Anzeige- und Bedienkomponente weist für die Anzeige- und Bedieneinheiten auf der Oberseite der Bedienoberfläche der Anzeige- und Bedienkomponente Tastmulden und/oder Slidermulden (also muldenartige Vertiefungen in der Bedienoberfläche der Anzeige- und Bedienkomponente) für die kapazitiven Taster und/oder kapazitiven Slider auf.

Dabei sind zusätzlich oder alternativ auf der Rückseite der Anzeige- und Bedienkomponente im Grundträger ebenfalls Slidermulden anordbar, damit für den Bediener für die am unteren Rand der Anzeige- und Bedienkomponente liegenden kapazitiven Slider eine ergonomische Bedienung gewährleistet ist.

Weitere bevorzugte Ausgestaltungen der Erfindung ergeben sich aus den übrigen, in den Unteransprüchen genannten Merkmalen.

Die Erfindung wird nachfolgend an einem Ausführungsbeispiel anhand der zugehörigen Zeichnungen erläutert. Es zeigen:
- Figur 1A: eine Ansicht schräg von oben auf eine Instrumententafel mit einer Anzeigeund Bedienkomponente in einem Kraftfahrzeug;
- Figur 1B: eine Ansicht schräg von oben auf die Instrumententafel mit der Anzeige- und Bedienkomponente;
- Figur 1C: eine Detailansicht auf einen zweiten Anzeige- und Bedienbereich der Bedienoberfläche der Anzeige- und Bedienkomponente;
- Figur 2A: eine Detailansicht auf den Grundträger der Anzeige- und Bedienkomponente mit darin angeordneten Anzeige- und Bedieneinheiten und
- Figur 2B: eine Detailansicht auf den Grundträger im Bereich des zweiten Anzeige- und Bedienbereiches der Anzeige- und Bedienkomponente mit darin angeordneten Anzeige- und Bedieneinheiten.

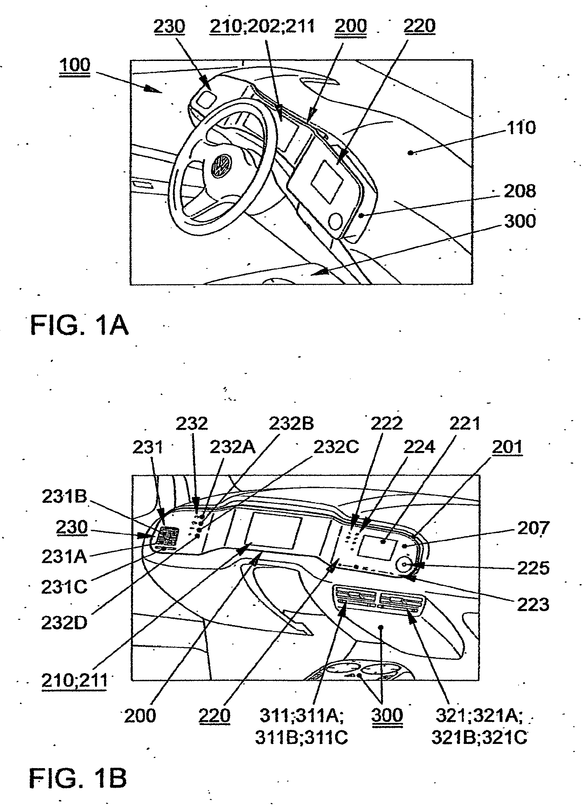

Figur 1A zeigt eine Instrumententafel 100 im Innenraum eines Kraftfahrzeuges. Die Instrumententafel 100 weist einen Korpus 110 auf. Wie vorn zum Stand der Technik beschrieben, sind üblicherweise in diesem Korpus 110 die Anzeige- und Bedieneinheiten eines Kraftfahrzeuges untergebracht. Figur 1A zeigt abweichend vom Stand der Technik eine Anzeige- und Bedienkomponente 200, welche zu dem Innenraum des Fahrzeuges hin ausgerichtet ist und in oder auf den Korpus 110 der Instrumententafel 100 ein- oder aufgesetzt ist und dabei den Korpus der Instrumententafel 100 zumindest teilweise flächig überspannt. Die Anzeige- und Bedienkomponente 200 ist im dargestellten Ausführungsbeispiel im Wesentlichen im Bereich eines Fahrzeugführers angeordnet. Dort wird die Anzeige- und Bedienkomponente 200 an der Instrumententafel 100 befestigt oder die Anzeige- und Bedienkomponente 200 wird die Instrumententafel 100 in Richtung Motor durchgreifend an der dahinterliegenden Karosserie des Fahrzeuges befestigt.

Die Anzeige- und Bedienkomponente 200 kann über den gesamten Bereich von Fahrerseite und Beifahrerseite oder sogar an anderen Positionen des Kraftfahrzeuges angeordnet werden. Insofern ist die nachfolgende weitere Beschreibung nur als Beispiel zu betrachten.

In Figur 1A ist neben dem Korpus 110 der Instrumententafel 100 und der Anzeige- und Bedienkomponente 200 im unteren Bereich teilweise eine Mittelkonsole 300 sichtbar, die in Figur 1 B noch besser gezeigt ist.

Bei der nachfolgenden weiteren Beschreibung sind, das Verständnis erleichternd, alle dreistelligen mit den Bezugszeichen 1xx bezeichneten Begriffe und Bauteile dem Korpus 110 der Instrumententafel 100 zugeordnet. Alle mit den dreistelligen Bezugszeichen 2xx bezeichneten Begriffe und Bauteile gehören zur Anzeige- und Bedienkomponente 200 und alle mit den dreistelligen Bezugszeichen 3xx bezeichneten Begriffe und Bauteile sind der Mittelkonsole 300 zugeordnet.

Die Anzeige- und Bedienkomponente 200 weist einen ersten Anzeige- und Bedienbereich 210, einen zweiten Anzeige- und Bedienbereich 220 und einen dritten Anzeige- und Bedienbereich 230 auf.

Der erste Anzeige- und Bedienbereich 210 ist in der Mitte der Anzeige- und Bedienkomponente 200 direkt vor dem Fahrzeugführer angeordnet, wobei in diesem ersten Anzeige- und Bedienbereich 210 ein Bedien- und Anzeigedisplay 211 angeordnet ist, in welchem die Kombiinstrumente, zum Beispiel Geschwindigkeitsanzeiger, Drehzahlanzeiger und dergleichen, des Kraftfahrzeuges dargestellt sind.

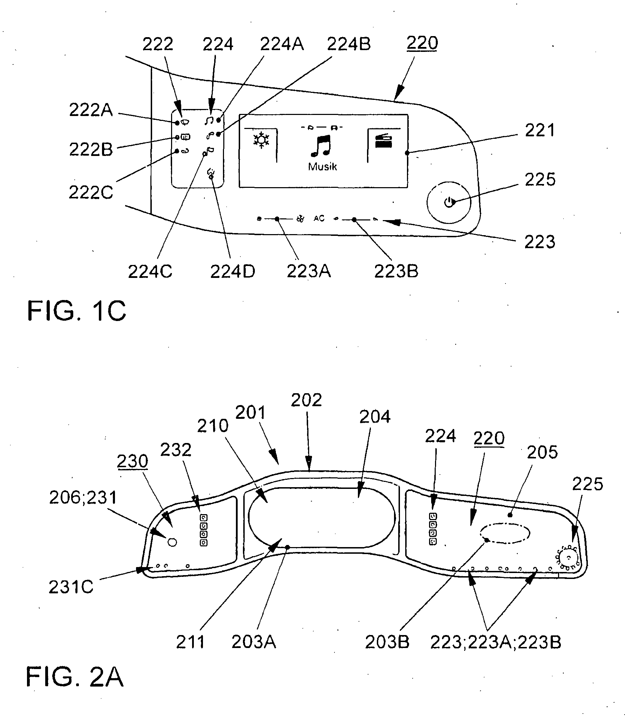

Auf diesem, in der Anzeige- und Bedienkomponente 200 angeordneten frei programmierbaren, Display 211 werden jetzt die bisher körperlich in eine Instrumententafel eingesetzten Anzeige-und Bedieneinheiten [wie beispielsweise ein Tachometer, ein Drehzahlmesser, die Tankanzeige, die Kühlmitteltemperaturanzeige, Warnlampen und Fahrtrichtungsanzeiger (Blinker)] auf dem Bedien- und Anzeigedisplay 211 der Anzeige- und Bedienkomponente 200 dargestellt. Für das Bedien- und Anzeigedisplay 211 ist in der Anzeige- und Bedienkomponente 200 ein Bauraum 204 geringer Tiefe vorgesehen, der in Figur 2A dargestellt ist.

Wie aus Figur 1A ferner sichtbar, ist die Anzeige- und Bedienkomponente 200 im Bereich des Kombiinstrumentes 211 vertieft ausgeführt und weist eine Vertiefung 202 auf. Es wird deutlich, dass die übliche Vielzahl von Anzeigeinstrumenten, die sonst im Korpus 110 einer Instrumententafel 100 untergebracht sind, jetzt im Display 211 der Anzeige- und Bedienkomponente 200 angeordnet sind, so dass der Korpus 110 der Instrumententafel 100 unabhängig von jeglichen Anzeige- und Bedienelementen gestaltet werden kann.

Das optische Erscheinungsbild der Instrumententafel 100 in seinem Aufbau zwischen einer Frontscheibe des Fahrzeuges und der Anzeige- und Bedienkomponente 200 kann einfach in seiner Höhe auf die Höhe des Korpus 110 der Instrumententafel 100 abgestimmt werden, wobei durch die unabhängige Anordnung sowohl Instrumententafel 100 als auch die Anzeige- und Bedienkomponente 200 eine große gestalterische Designfreiheit aufweisen.

Im Ausführungsbeispiel ist neben dem rechts dargestellten zweiten Anzeige- und Bedienbereich 220 auch zusätzlich der links vom Fahrer angeordnete dritte Anzeige- und Bedienbereich 230 ausgeführt. Der zweite und dritte Anzeige- und Bedienbereich 220, 230 der Anzeige- und Bedienkomponente 200 liegen in einer Ebene, die oberhalb der tiefer liegenden Ebene der Vertiefung 202 liegt. Aus der Ebene der Vertiefung 202 geht die Anzeige- und Bedienkomponente 200 fließend in einem gebogenen Übergang in den zweiten, rechten und den linken, dritten Anzeige- und Bedienbereich 220, 230 über.

Zwischen der Vorderseite der Instrumententafel 200 und der Rückseite der Anzeige- und Bedienkomponente 200 ist ein spaltartiger Zwischenraum 208 ausgebildet.

In dem zweiten und dritten Anzeige- und Bedienbereich 220, 230 sind ebenfalls Anzeige- und Bedieneinheiten untergebracht, die im Folgenden in Zusammenschau der Figuren 1A, 1B und 1C näher beschrieben werden.

Wie Figur 1B zunächst andeutet, ist die Anzeige- und Bedienkomponente 200 aus einem Unterteil als Grundträgers 201 und einem Oberteil als Bedienoberfläche 207 ausgebildet. Die Form des Grundträgers 201 und die Form der Bedienoberfläche 207 sind dabei an die Anzeige- und Bedieneinheiten 211, 221, 222, 223, 224, 225, 231, 232 angepasst. Die Anzeige- und Bedieneinheiten 211, 221, 222, 223, 224, 225, 231, 232 können jedoch auch bei einer vorgegebenen Form des Grundträgers 201 und/oder der Bedienoberfläche 207 mit ihrer Anlagefläche an den Grundträger 201 und/oder die Bedienoberfläche 207 angepasst werden.

Im zweiten Anzeige- und Bedienbereich 220 ist ein weiteres Display 221 angeordnet, welches als Infotainment/Navigationsdisplay oder dergleichen fungiert. In diesem Display 221 sind alle dem Nutzer zur Verfügung gestellten Steuer- und Regeleingriffe programmiert und zur Steuerung und Regelung von Komponenten vorgesehen, so dass in verschiedenen Bedienebenen des Displays 221 auch die Klima - und/oder Belüftungsanlage dargestellt und gesteuert oder geregelt werden kann.

Die Anzeige- und Bedienkomponente 200 weist also insgesamt eine geschlossene Bedienoberfläche 207 auf, hinter der die Displays 211, 221 angeordnet sind, die vorzugsweise als kapazitive Touchscreens ausgeführt sind und über kapazitive Sensorik durch Annäherung und Berührung bedienbar sind.

Innerhalb der Bedienoberfläche 207 sind keinerlei Fugen, Rillen oder dergleichen vorhanden, so dass sich ein glattes und ebenes Erscheinungsbild ergibt.

Das Oberteil 207 (die Bedienoberfläche der Anzeige- und Bedienkomponente 200) ist aus einem dünnen, transparenten oder transluzenten Material, insbesondere einem Kunststoff (beispielsweise einem Plexiglas), ausgebildet, welches auf seiner Oberseite und/oder Innenseite eine Beschichtung aufweist.

Die Beschichtung wird durch mechanische und/oder chemische, manuelle oder automatische Druck-, Beschichtungs- oder Abtragungsprozesse unter Ausbildung der transparenten oder transluzenten Flächen und Symbole entfernt. Es besteht auch die Möglichkeit, die Beschichtung durch Druck- oder Beschichtungsprozesse der Bedienoberfläche 207 so auszubilden, dass bereits innerhalb des aufgetragenen Materials materialfreie Flächen und/oder materialfreie Symbole vorgesehen sind. Die Symboliken und die Flächen für die Anzeige- und Bedieneinheiten sind beispielsweise in einer möglichen Ausführung manuell oder automatisch abmaskiert (Displays) und/oder manuell oder automatisch abgefräst (Symbolik).

Die in Figur 1B gezeigten Displays 211, 221 hinterleuchten die Bedienoberfläche 207. Weitere Anzeige- und Bedieneinheiten, auf die nachfolgend eingegangen wird, werden ebenfalls in der Anzeige- und Bedienkomponente 200 hinter der Bedienoberfläche 207 angeordnet. Diese hinterleuchten die materialfreien Symbole der Beschichtung der Anzeige- und Bedienkomponente 200.

Im zweiten Anzeige- und Bedienbereich 220 (rechts), Figuren 1B bis 1C, ist beispielsweise eine Anzeige- und Bedieneinheit-Klima 222 angeordnet. Die Bedieneinheit-Klima 222 umfasst bei-spielsweise ein Anzeige- und Bedienelement-Defrost-Frontscheibe 222A, ein Anzeige- und Bedienelement-Defrost-Heckscheibe 222B und ein Anzeige- und Bedienelement-Umluft-Innenraum 222C. Diese als kapazitive Anzeige- und Bedienelemente ausgebildeten kapazitiven Taster liegen hinter der Bedienoberfläche 207 der Anzeige- und Bedienkomponente 200 und hinterleuchten jeweils eine zugehörige Symbolik, so dass ein oder mehrere kapazitive Taster im Zusammenhang mit einer vorgesehenen Beleuchtung der kapazitiven Taster hinter der Bedienoberfläche 207 ausgebildete Anzeige- und Bedieneinheiten ergeben, die gleichzeitig als Anzeigeinstrumente dienen. Die Anzeige- und Bedieneinheit-Klima 222 bildet somit sogenannte "Shortcut" (An/Aus) Anzeige- und Bedienelemente 222A, 222B und 222C aus. "Shortcut" bedeutet, dass für die oben genannten am häufigsten benötigten Funktionen der Bedieneinheit-Klima 222 separate Anzeige- und Bedienelemente 222A, 222B und 222C angeordnet sind.

Weitere Funktionen der Klima- und Belüftungsanlage sind im Infotainment/Navigationsdisplay 221 hinterlegt, so dass über "Shortcut" der Anzeige- und Bedienelemente 222A, 222B und 222C hinausgehende Steuerungen und Regelungen möglich sind.

Genauso verhält es sich mit der rechts neben der Anzeige- und Bedieneinheit-Klima 222 angeordneten Bedieneinheit-Infotainment/Navigation 224. Hier sind einzelne Anzeige- und Bedienelemente beispielsweise ebenfalls als "Shortcuts" in einer Anzeige- und Bedieneinheit 224 zusammengefasst, nämlich ein Anzeige- und Bedienelement-Audio 224A, ein Anzeige- und Bedienelement-Telefön 224B, ein Anzeige- und Bedienelement-Navigation 224C und ein Anzeige-und Bedienelement-Home 224D.

Weiterhin ist der zweite Anzeige- und Bedienbereich 220 (rechts) so ausgeführt, dass eine Anzeige- und Bedieneinheit 225 als "kapazitiver Drehtaster" ausgebildet ist, der in diesem Ausführungsbeispiel als Lautstärkeregeleinheit für das Infotainment/Navigationsdisplay 221 fungiert und gleichzeitig als kapazitiver Taster für die Ein/Aus-Funktion des Displays 221 (Infotainment/Navigation) verwendet wird.

Der kapazitive Drehtaster 225 ist zur Lautstärkeregelung im äußeren Bereich durch Annäherung, Fingerberührung und kreisende Bewegung mit dem Finger auf der Bedienoberfläche 207 wie ein kreisförmiger kapazitiver Slider bedienbar, wobei auf dem äußeren Rand dieses kapazitiven Drehtasters 225, wie in den weiteren Figuren noch genauer sichtbar wird, Leuchtmittel angeordnet sind, die visuell (farblich oder durch unterschiedliche Leuchtkraft) die eingestellte Lautstärke verdeutlichen. In der Mitte des kapazitiven Drehtasters 225 ist der kapazitive Taster für die Ein/Aus-Funktion des Displays 221 angeordnet, der ebenfalls durch ein entsprechendes Leuchtmittel hinterleuchtet ist.

Figur 1C zeigt zudem detaillierter als die Figuren 1A und 1B, dass die Bedieneinheit-Klimaregelung 223 unterhalb des Displays 221 (Infotainment/Navigation) angeordnet ist. Diese Bedieneinheit-Klimaregelung 223 umfasst ein Anzeige- und Bedienelement 223A für das Gesamtvolumen, der dem Innenraum des Kraftfahrzeuges zur Verfügung stellbaren Luftmenge der Lüftungsanlage und ein Anzeige- und Bedienelement 223B, welches für die Einstellung der gewünschten Lufttemperatur verantwortlich ist. Auch die, die Anzeige- und Bedieneinheit-Klimaregelung 223 bildenden, Anzeige- und Bedienelemente 223A, 223B sind durch entsprechende transparente oder transluzente Symboliken innerhalb der Beschichtung des Oberteiles 207 freigelegt oder freigehalten.

Die so freigelegten oder freigehaltenen Symboliken sind mit Leuchtmitteln hinterlegt, wobei diese Anzeige- und Bedienelemente 223A, 223B als kapazitive Slider ausgelegt sind, die durch Annäherung und hier horizontale Fingerbewegung eine Verstellung der Luftmenge und/oder der Temperatur der Klima- und Belüftungsanlage durch "sliden"/gleiten auf Bedienoberfläche 207 in dafür vorgesehenen Slidermulden (eine Art länglich vertiefte Mulde) auf der Bedienoberfläche 207 ermöglichen. Eine solche Slidermulde und ein zugehöriges Anzeige- und Bedienelement 223A können auch auf der Rückseite im Grundträger 201 der Anzeige- und Bedienkomponente 200 angeordnet sein, so dass ein Griff unter und hinter die Anzeige- und Bedienkomponente 200 mit der inneren Handfläche nach oben ebenfalls eine horizontale gleitende Fingerbewegung ermöglicht. Für den Benutzer wird eine angenehme und ergonomische Betätigung ermöglicht.

In dem dritten Anzeige- und Bedienbereich 230 der Anzeige- und Bedienkomponente 200 ist eine Anzeige- und Bedieneinheit-Belüftungsanlage 231 für die Klima- und Belüftungsanlage angeordnet. Daraus wird deutlich, dass auch die sonst-üblichen Belüftungselemente von der Instrumententafel 100 in die Anzeige- und Bedienkomponente 200 verlegt sind.

Diese Anzeige- und Bedieneinheit-Belüftungsanlage 231 umfasst mechanische Elemente, wie ein Belüftungselement 231A selbst und das Bedienelement 231B, mittels denen die Ausströmrichtung einstellbar ist. Das zur Einstellung der Ausströmrichtung vorhandene mechanische Bedienelement 231B kann als elektronisch steuerbares Bedienelement 231B ausgelegt werden, welches beispielsweise über die Bedienoberfläche des Infotainment/Navigationsdisplays 221 ansteuerbar ist. Als Bedienelement 231C, mittels dem das Ausströmvolumen auf der linken Fahrerseite einstellbar ist, ist wiederum ein Anzeige- und Bedienelement als kapazitiver Slider verwendet worden, welcher in dieser beispielhaften Anordnung durch Annäherung oder Berührung und horizontale Bewegung durch "sliden"/gleiten auf der Bedienoberfläche 207 bedienbar ist.

Zusätzlich sind, wie aus Figur 1B ersichtlich ist, im Bereich der Instrumententafel 100 weitere Bedieneinheiten 311, 321 mit Belüftungselementen für die Belüftungsanlage (links und rechts) in der Mittelkonsole 300 angeordnet. Diese Anzeige- und Bedieneinheit-Belüftungsanlage 311, 321 weist die Belüftungselemente 311A, 321A selbst, die mechanischen Bedienelemente für die Ausströmrichtung 311B, 321B und die kapazitiven Slider als Anzeige- und Bedienelemente für das Ausströmvolumen 311C, 321C der Belüftungselemente 311A, 321A auf.

Die vorgestellten Anzeige- und Bedieneinheiten für die Klimatisierung und Belüftung des Innenraumes des Kraftfahrzeuges umfassen also die Bedieneinheiten 311, 321 in der Mittelkonsole 300 und die linke Bedieneinheit 231 als Anzeige- und Bedieneinheit-Belüftungsanlage im dritten Anzeige- und Bedienbereich 230 der Anzeige- und Bedienkomponente 200.

Es besteht die Möglichkeit, dass durch den spaltartigen Zwischenraum 208 zwischen der Instrumententafel 100 und der Anzeige- und Bedienkomponente 200 zusätzlich zu den angeordneten Belüftungselementen 231, 311, 321 indirekte Belüftungselemente hinter der Anzeige- und Bedienkomponente 200 angeordnet werden, so dass eine Kombination von indirekter und direkter Belüftung des Innenraumes eines Kraftfahrzeuges realisierbar ist.

Im dritten Anzeige- und Bedienbereich 230 ist, wie Figur 1B weiter zeigt, zusätzlich noch eine Bedieneinheit-Licht 232 angeordnet. Diese Bedieneinheit-Licht 232 ist aus dem Stand der Technik als konventioneller Drehtaster bekannt, der im Korpus der Instrumententafel 100 angeordnet ist. Erfindungsgemäß umfasst die Bedieneinheit-Licht 232 vier kapazitive Taster die in der, vor dem Korpus 110 der Instrumententafel 100 abgesetzten, Anzeige- und Bedienkomponente 200 ausgeführt sind. Diese Anzeige- und Bedieneinheit-Licht 232 umfasst somit vier Anzeige- und Bedienelemente, das Anzeige- und Bedienelement-Nebelscheinwerfer 232A, das Anzeige- und Bedienelement- Nebelschlussleuchte 232B, das Anzeige- und Bedienelement-Autofunktion 232C und das Anzeige- und Bedienelement-Ein/Aus 232D. Die jeweiligen Anzeige- und Bedienelemente stellen dabei hinter der Bedienoberfläche 207 angeordnete kapazitive Taster dar, deren jeweilige Symbolik in der Bedienoberfläche 207 freigehalten oder erzeugt worden ist. Diese kapazitiven Taster sind zudem durch entsprechende Leuchtmittel hinterlegt, so dass für das Fahrzeuglicht hinter der Bedienoberfläche 207 der Anzeige- und Bedienkomponente 200 eine beleuchtete kapazitive Anzeige- und Bedieneinheit-Licht 232 ausgeführt ist.

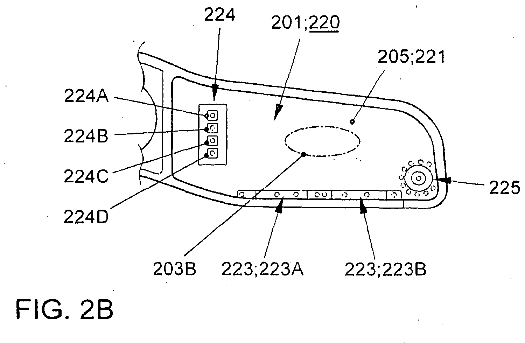

Die Figuren 2A und 2B zeigen in einer Einzelheit den Grundträger 201, also das Unterteil der Anzeige- und Bedienkomponente 200. In Figur 2A ist sichtbar, dass in der Anzeige- und Bedienkomponente 200 im ersten Anzeige- und Bedienbereich 210 im Bereich der Vertiefung 202 der Bauraum 204 für das Display-Kombiinstrument 211 vorgesehen ist und das Unterteil 201 zur Instrumententafel 100 hin eine erste Öffnung 203A aufweist, um die entsprechenden Kabelverbindungen beispielsweise aller im ersten und dritten Anzeige- und Bedienbereich 210, 230 angeordneten Anzeige- und Bedieneinheiten zur übergeordneten Bordelektronik zu realisieren.

Eine weitere Öffnung ist beispielsweise zusätzlich im zweiten Anzeige- und Bedienbereich 220 als zweite Öffnung 203B vorgesehen, so dass auch alle Kabelverbindungen und dergleichen des Displays-Infotainment/Navigation 221 und der im zweiten Anzeige- und Bedienbereich angeordneten kapazitiven Anzeige- und Bedieneinheiten 222, 223, 224, 225 zur Bordelektronik hin verkabelt werden können.

In den Figuren 2A und 2B sind im zweiten Anzeige- und Bedienbereich 220 der Bauraum 205 für das Display-Infotainment/Navigation 221 und der notwendige Bauraum für die Anzeige- und Bedieneinheiten 222, 223, 224, 225 innerhalb der Anzeige- und Bedienkomponente 200 sichtbar.

Die Anzeige und Bedieneinheiten 211, 221, 222, 223, 224, 225, 231, 232 werden auf der Innenseite der Oberteiles 207 und/oder des Grundträger 201 verklebt, verrastet oder verklipst. Zudem ist in den Figuren 2A und 2B für die jeweiligen Anzeige- und Bedieneinheiten 222, 223, 224, 225, 231, 232 im zweiten und dritten Anzeige- und Bedienbereich 220 und 230 die Anordnung der zugehörigen Leuchtmittel dargestellt. Um die Anzeige und Bedieneinheiten 211, 221, 222, 223, 224, 225, 231, 232 zu realisieren, werden in dem jeweiligen Bauraum LED-Platinen angeordnet, auf denen oder in denen entsprechende LED's angeordnet sind. Die Anordnung der LED's folgt der jeweiligen Anordnung der kapazitiven Taster 222A-222C, 232A-232D, 224A-224D des kapazitiven Drehtasters 225, wobei die als kapazitive Slider ausgeführten Anzeige-und Bedienelemente 231C, 223A, 223B sowie der kapazitive Drehtaster 225 mehrere LED's aufweisen, die entsprechend der Bedienrichtung der Slider auf einer länglichen oder kreisrunden LED-Platine angeordnet sind.

In den Figuren sind für die kapazitiven Taster die LED's dargestellt, die bei einer vorgenommenen Bedienhandlung in Abhängigkeit der Bedienhandlung leuchten. Bei den kapazitiven Slidern 223A, 223B/ 231C sind beispielhaft nur einige LED's dargestellt.

Oberhalb dieser LED-Platinen (in Richtung Innenraum) sitzen nicht weiter dargestellte kapazitive Sensorplatinen mit kapazitiven Sensorflächen, die für die kapazitiven Taster und kapazitiven Slider unterschiedlich in ihrer Form ausgebildet sind und Öffnungen aufweisen, die von den Leuchtmitteln, die auf den LED-Platinen sitzen, durchgriffen werden.

Innerhalb des zur Verfügung stehenden weiteren Bauraumes der Anzeige- und Bedienkomponente 200 sind zusätzlich zu den LED-Platinen und zu den Sensorplatinen der Bedieneinheiten 211, 221, 222, 223, 224, 225, 231 und 232 entsprechende Logik-Platinen für die Schaltung der jeweiligen kapazitiven Taster und Slider der jeweiligen Anzeige- und Bedieneinheiten untergebracht.

Die Erfindung schafft somit eine Anzeige- und Bedienkomponente 200, welche insgesamt eine besonders flache Bauform aufweist, und sich nach den jeweiligen designerischen Wünschen an die Form des Korpus 110 der Instrumententafel 100 anpassen lässt. Die sonst in der Instrumententafel 100 üblichen Anzeige- und Bedieneinheiten werden in den Raum zwischen Grundträger 201 und Bedienoberfläche 207 der Anzeige- und Bedienkomponente 200 verlagert, wobei für die Anzeige- und Bedieneinheiten eine in dieser Anordnung und Verwendung neue innovative Technik in Form von mit Leuchtmitteln hinterlegten Anzeige- und Bedieneinheiten 211, 221, 222, 223, 224, 225, 231 und 232 verwendet wird, wobei die Displays und/oder Anzeige-und Bedieneinheiten hinsichtlich ihrer Position frei in der Anzeige- und Bedienkomponente 200 anordbar sind.

### Bezugszeichenliste

- 100: Instrumententafel
- 110: Korpus

- 200: Anzeige- und Bedienelement
- 201: Grundträger
- 202: Vertiefung
- 203A: erste Öffnung
- 203B: zweite Öffnung
- 204: Bauraum Display-Kombinstrument 211
- 205: Bauraum Display-Infotainment/Navigation 221
- 206: Bauraum Anzeige- und Bedieneinheit-Belüftungsanlage 231
- 207: Bedienoberfläche
- 208: Zwischenraum

- 210: erster Anzeige- und Bedienbereich
- 211: Display-Kombinstrument

- 220: zweiter Anzeige- und Bedienbereich
- 221: Display-Infotainment/Navigation

- 222: Bedieneinheit-Klima
- 222A: Defrost-Frontscheibe
- 222B: Defrost-Heckscheibe
- 222C: Umluft-Innenraum

- 223: Bedieneinheit-Klimaregelung
- 223A: Anzeige- und Bedienelement-Gesämtvolumen Belüftungsanlage
- 223B: Anzeige- und Bedienelement-Temperatur Belüftungsanlage

- 224: Anzeige- und Bedieneinheit-Infotainment/Navigation
- 224A: Anzeige- und Bedienelement-Audio
- 224B: Anzeige- und Bedienelement-Telefon
- 224C: Anzeige- und Bedienelement-Navigation
- 224D: Anzeige- und Bedienelement-Home
- 225: Anzeige- und Bedieneinheit-Drehtaster-Infotainment

- 230: dritter Anzeige- und Bedienbereich
- 231: Anzeige- und Bedieneinheit-Belüftungsanlage
- 231A: Belüftungselement
- 231B: Bedienelement-Ausströmrichtung
- 231C: Anzeige- und Bedienelement-Ausströmvolumen

- 232: Anzeige- und Bedieneinheit-Licht
- 232A: Anzeige- und Bedienelement-Nebelscheinwerfer
- 232B: Anzeige- und Bedienelement-Nebetschlussleuchte
- 232C: Anzeige- und Bedienelement-Autofunktion
- 232D: Anzeige- und Bedienelement-Ein/Aus

- 300: Mittelkonsole
- 311: Anzeige- und Bedieneinheit-Belüftungsanlage - links
- 311A: Belüftungselement
- 311B: Bedienelement-Ausströmrichtung
- 311C: Anzeige- und Bedienelement-Ausströmvolumen

- 321: Anzeige- und Bedieneinheit-Ausströmer - rechts
- 321A: Belüftungselement
- 321B: Bedienelement-Ausströmrichtung
- 321C: Anzeige- und Bedienelement-Ausströmvolumen

## Patentansprüche

1. Instrumententafel (100), insbesondere für ein Kraftfahrzeug, welche mindestens eine Anzeige- und Bedieneinheit umfasst, die mindestens ein Anzeige- und Bedienelement aufweist, wobei das mindestens eine Anzeige- und Bedienelement (222A, 222B, 222C, 223C, 224A, 224B, 224C, 224D, 231C/232A, 232B/232C/ 232D) der mindestens einen Anzeige- und Bedieneinheit (211, 221, 222, 223, 224, 225, 231, 232) ein kapazitives Anzeige- und Bedienelement ist, das durch Annäherung an eine Bedienoberfläche (207) und/oder Berührung der Bedienoberfläche (207) bedienbar ist,
**dadurch gekennzeichnet, dass**
die mindestens eine Anzeige- und Bedieneinheit (211, 221, 222, 223, 224, 225, 231, 232) in einem Bauraum (204, 205, 206) einer Anzeige- und Bedienkomponente (200) zwischen einem Grundträger (201) als Unterteil und einem als Bedienoberfläche (207) ausgebildeten mit dem Grundträger (201) verbundenen Oberteil angeordnet ist, wobei die Anzeige- und Bedienkomponente (200) zu einem Innenraum eines Fahrzeuges gerichtet in oder auf den Korpus (110) der Instrumententafel (100) ein- oder aufgesetzt ist und dabei den Korpus (110) der Instrumententafel (100) zumindest teilweise flächig überspannt, so dass die Anzeige- und Bedienkomponente (200) zwischen der Vorderseite des Korpus (110) der Instrumententafel (100) und der Rückseite der Anzeige- und Bedienkomponente (200) einen spaltartigen Zwischenraum (208) bildet.

2. Instrumententafel nach Anspruch 1,
**dadurch gekennzeichnet, dass**
der Korpus (110) der Instrumententafel (100) unabhängig von den in der Anzeige- und Bedienkomponente (200) angeordneten Anzeige- und Bedieneinheiten (211, 221, 222, 223, 224, 225, 231, 232) ausbildbar ist.

3. Instrumententafel nach Anspruch 1,
**dadurch gekennzeichnet, dass**
die Anzeige- und Bedienkomponente (200) das Unterteil als Grundträger (201) und das Oberteil als Bedienoberfläche (207) umfasst, wobei die Form von Grundträger (201) als Unterteil und/oder Bedienoberfläche (207) als Oberteil an die Anzeige- und Bedieneinheiten (211, 221, 222, 223, 224, 225, 231, 232) angepasst sind.

4. Instrumententafel nach Anspruch 3,
**dadurch gekennzeichnet, dass**
die Form des Grundträgers (201) der Anzeige- und Bedienkomponente unabhängig von dem Korpus (110) der Instrumententafel (100) auswählbar und frei gestaltbar ist.

5. Instrumententafel nach Anspruch 1,
**dadurch gekennzeichnet, dass**
die Form mindestens eines Anzeige- und Bedienelementes der Anzeige- und Bedieneinheiten (211, 221, 222, 223, 224, 225, 231, 232) an die Form der Bedienoberfläche (207) der Anzeige- und Bedienkomponente (200) angepasst ist.

6. Instrumententafel nach Anspruch 1,
**dadurch gekennzeichnet, dass**
die Anzeige- und Bedieneinheiten (211, 221, 222, 223, 224, 225, 231, 232) hinter der Bedienoberfläche (207) der Anzeige- und Bedienkomponente (200), die eine fugenfreie abgeschlossene Oberfläche bildet, angeordnet sind.

7. Instrumententafel nach Anspruch 6,
**dadurch gekennzeichnet, dass**
die Anzeige- und Bedienkomponente (200)
• mindestens einen ersten Anzeige- und Bedienbereich (210) aufweist, in dem mindestens eine Anzeige- und Bedieneinheit (211), ein Kombiinstrumenten-Display, als frei programmierbares Display angeordnet ist und/oder
• mindestens einen zweiten Anzeige- und Bedienbereich (220) aufweist, in dem mindestens eine Anzeige- und Bedieneinheit (221) ein für Infotainment und/oder Navigation frei programmierbares Display und/oder zum Infotainment und/oder der Navigation zugehörige Bedieneinheiten (224, 225) und/oder mindestens eine Bedieneinheit Klimaregelung (223) und/oder mindestens eine zur Klimaregelung zugehörende Bedieneinheit (222) angeordnet ist/sind, und/oder
• mindestens einen dritten Anzeige- und Bedienbereich (230) aufweist, in dem mindestens eine Anzeige- und Bedieneinheiten-Belüftungsanlage (231) einer Belüftungsanlage und/oder mindestens eine Bedieneinheit-Licht (232) angeordnet ist.

8. Instrumententafel nach Anspruch 1,
**dadurch gekennzeichnet, dass**
die Anzeige- und Bedieneinheiten
• als programmierbare Displays (211, 221) oder
• als Anzeige- und Bedieneinheit (222, 223, 224, 225, 231, 232), die
- aus mindestens einem Anzeige- und Bedienelement (222A, 222B, 222C/ 223A, 223B/ 224A, 224B, 224C, 224D/ 231C/ 232A, 232B 232C, 232D) oder
- aus einer Kombination von mindestens einem Anzeige- und Bedienelement (231C) und mindestens einem weiteren Bedienelement (231A, 231B) ohne Anzeigefunktion besteht
ausgebildet ist/sind.

9. Instrumententafel nach Anspruch 1,
**dadurch gekennzeichnet, dass**
die Bedienoberfläche der Anzeige- und Bedienkomponente (200) aus einem dünnen, transparenten oder transluzenten Material, insbesondere Kunststoff, ausgebildet ist, welches auf seiner Oberseite und/oder Innenseite eine Beschichtung aufweist.

10. Instrumententafel nach Anspruch 9,
**dadurch gekennzeichnet, dass**
die Beschichtung im Bereich der Anzeige- und Bedieneinheiten (211, 221, 222, 223, 224, 225, 231, 232) durch mechanische und/oder chemische manuelle oder automatische Druck-, Beschichtungs- oder Abtragungsprozesse unter Ausbildung von transparenten oder transluzenten Vollflächen und/oder transparenten oder transluzenten Symbolen entfernt und/oder nicht ausgeführt wird.

11. Instrumententafel nach Anspruch 10,
**dadurch gekennzeichnet, dass**
die Beschichtung der Bedienoberfläche (207) eine Licht undurchlässige Folie ist, die auf einer Oberseite und/oder einer Innenseite der Bedienoberfläche angeordnet ist, wobei die Folie im Bereich der Anzeige- und Bedieneinheiten (211, 221, 222, 223, 224, 225, 231, 232) nicht aufgebracht oder in bestimmten Bereichen entfernt wird, so dass die Bedienoberfläche transparente oder transluzente Vollflächen und/oder transparente oder transluzente Symbole aufweist.

12. Instrumententafel nach Anspruch 11
**dadurch gekennzeichnet, dass**
• hinter den freigehaltenen oder erzeugten transparenten oder transluzenten Vollflächen der Anzeige- und Bedienkomponente (200) mindestens ein frei programmierbares Displays (211, 221) als Touchscreens angeordnet ist und/oder
• hinter den freigehaltenen oder erzeugten Symbolen der Anzeige- und Bedienkomponente (200) mindestens eine Anzeige- und Bedieneinheit (222, 223, 224, 225, 231, 232) angeordnet ist, die mindestens ein mit Leuchtmitteln versehenes Anzeige- und Bedienelement (222A, 222B, 222C/ 223C/ 224A, 224B, 224C, 224D/ 231C/ 232A, 232B 232C, 232D) aufweist.

13. Instrumententafel nach Anspruch 1,
**dadurch gekennzeichnet, dass**
• die mindestens eine Anzeige- und Bedieneinheit (222, 224, 232) mindestens ein Anzeige- und Bedienelement (222A, 222B, 222C/ 224A, 224B, 224C, 224D/ 232A, 232B 232C, 232D) als kapazitiven Taster aufweist, und/oder
• die mindestens eine Anzeige- und Bedieneinheit (223, 231) mindestens ein Anzeige- und Bedienelement (223A, 223B/ 231C) als kapazitiven Slider aufweist, und/oder
• die mindestens eine Anzeige- und Bedieneinheit (225) eine Kombination aus einem kapazitiven Taster und einen kapazitivem Slider ist.

14. Instrumententafel nach Anspruch 1,
**dadurch gekennzeichnet, dass**
auf der Vorderseite der Bedienoberfläche (207) Tastmulden und Slidermulden für die kapazitiven Taster (222A, 222B, 222C/ 224A, 224B, 224C, 224D/ 232A, 232B 232C, 232D) und für die kapazitiven Slider (223A, 223B/ 231C) angeordnet sind.

15. Instrumententafel nach Anspruch 14,
**dadurch gekennzeichnet, dass**
Slidermulden auf der Rückseite der Anzeige- und Bedienkomponente (200) im Grundträger (201) angeordnet sind, um für den Bediener, für die am unteren Rand der Anzeige- und Bedienkomponente (200) liegenden kapazitiven Slider (223A, 223B/ 231C) eine ergonomische Bedienung zu gewährleisten.

## Claims

1. Instrument panel (100), in particular for a motor vehicle, which comprises at least one display and operator control unit which has at least one display and operator control element, wherein the at least one display and operator control element (222A, 222B, 222C, 223C, 224A, 224B, 224C, 224D, 231C/232A, 232B/232C/232D) of the at least one display and operator control unit (211, 221, 222, 223, 224, 225, 231, 232) is a capacitive display and operator control element which can be operated by making it approach an operator control interface (207) and/or touching the operator control interface (207),
**characterized in that**
the at least one display and operator control unit (211, 221, 222, 223, 224, 225, 231, 232) is arranged in an installation space (204, 205, 206) of a display and operator control component (200) between a base carrier (201) as a lower part and an upper part which is embodied as an operator control interface (207) and is connected to the base carrier (201), wherein the display and operator control component (200) is directed to a passenger compartment of a vehicle and is fitted into or on to the body (110) of the instrument panel (100), and in the process spans the body (110) of the instrument panel (100) in an at least partially planar fashion, with the result that the display and operator control component (200) forms a gap-like intermediate space (208) between the front side of the body (110) of the instrument panel (100) and the rear side of the display and operator control component (200).

2. The instrument panel according to Claim 1,
**characterized in that**
the body (110) of the instrument panel (100) can be formed independently of the display and operator control units (211, 221, 222, 223, 224, 225, 231, 232) which are arranged in the display and operator control component (200).

3. Instrument panel according to Claim 1,
**characterized in that**
the display and operator control component (200) comprises the lower part as a base carrier (201) and the upper part as an operator control interface (207), wherein the shape of the base carrier (201) as a lower part and/or that of the operator control interface (207) as an upper part are adapted to the display and operator control units (211, 221, 222, 223, 224, 225, 231, 232).

4. Instrument panel according to Claim 3,
**characterized in that**
the shape of the base carrier (201) of the display and operator control component can be selected and freely configured independently of the body (110) of the instrument panel (100).

5. Instrument panel according to Claim 1,
**characterized in that**
the shape of at least one display and operator control element of the display and operator control units (211, 221, 222, 223, 224, 225, 231, 232) is adapted to the shape of the operator control interface (207) of the display and operator control component (200).

6. Instrument panel according to Claim 1,
**characterized in that**
the display and operator control units (211, 221, 222, 223, 224, 225, 231, 232) are arranged behind the operator control interface (207) of the display and operator control component (200) which forms a joint-free, self-contained surface.

7. Instrument panel according to Claim 6,
**characterized in that**
the display and operator control component (200)
• has at least one first display and operator control region (210) in which at least one display and operator control unit (211), a combination instrument display, is arranged as a freely programmable display, and/or
• has at least one second display and operator control region (220) in which at least one display and operator control unit (221), a display which can be freely programmable for infotainment and/or navigation, and/or operator control units (224, 225) which are associated with infotainment and/or navigation, and/or at least one operator control unit for air conditioning control (223), and/or at least one operator control unit (222) which is associated with air conditioning control are/is arranged, and/or
• has at least one third display and operator control region (230) in which at least one display and operator control unit ventilation system (231) of a ventilation system and/or at least one operator control unit light (232) are/is arranged.

8. Instrument panel according to Claim 1,
**characterized in that**
the display and operator control units are embodied
• as programmable displays (211, 221) or
• as a display and operator control unit (222, 223, 224, 225, 231, 232) which
- is composed of at least one display and operator control element (222A, 222B, 222C/223A, 223B/224A, 224B, 224C, 224D/231C/232A, 232B, 232C, 232D) or
- of a combination of at least one display and operator control element (231C) and at least one further operator control element (231A, 231B) without a display function.

9. Instrument panel according to Claim 1,
**characterized in that**
the operator control interface of the display and operator control component (200) is embodied from a thin, transparent or translucent material, in particular plastic, which has a coating on its upper side and/or inner side.

10. Instrument panel according to Claim 9,
**characterized in that**
the coating is removed and/or not implemented in the region of the display and operator control units (211, 221, 222, 223, 224, 225, 231, 232) by means of mechanical and/or chemical, manual or automatic printing processes, coating processes or erosion processes, by forming transparent or translucent full surfaces and/or transparent or translucent symbols.

11. Instrument panel according to Claim 10,
**characterized in that**
the coating of the operator control surface (207) is an opaque film which is arranged on an upper side and/or an inner side of the operator control interface, wherein the film is not applied in the region of the display and operator control units (211, 221, 222, 223, 224, 225, 231, 232) or is removed in certain regions so that the operator control interface has transparent or translucent full surfaces and/or transparent or translucent symbols.

12. Instrument panel according to Claim 11,
**characterized in that**
• at least one freely programmable display (211, 221) is arranged as a touchscreen behind the transparent or translucent full surfaces of the display and operator control component (200) which are kept free or generated, and/or
• at least one display and operator control unit (222, 223, 224, 225, 231, 232) is arranged behind the symbols of the display and operator control component (200) which are kept free or generated, which display and operator control unit (222, 223, 224, 225, 231, 232) has at least one display and operator control element (222A, 222B, 222C/223C/224A, 224B, 224C, 224D/231C/232A, 232B, 232C, 232D) which is provided with lighting means.

13. Instrument panel according to Claim 1,
**characterized in that**
• the at least one display and operator control unit (222, 224, 232) has at least one display and operator control element (222A, 222B, 222C/224A, 224B, 224C, 224D/232A, 232B, 232C, 232D) as a capacitive pushbutton key, and/or
• the at least one display and operator control unit (223, 231) has at least one display and operator control element (223A, 223B/231C) as a capacitive slider, and/or
• the at least one display and operator control unit (225) is a combination of a capacitive pushbutton key and a capacitive slider.

14. Instrument panel according to Claim 1,
**characterized in that**
pushbutton recesses and slider recesses for the capacitive pushbutton keys (222A, 222B, 222C/224A, 224B, 224C, 224D/232A, 232B, 232C, 232D) and for the capacitive sliders (223A, 223B/231C) are arranged on the front side of the operator control interface (207).

15. Instrument panel according to Claim 14,
**characterized in that**
slider recesses are arranged on the rear side of the display and operator control component (200) in the base carrier (201), in order to ensure ergonomic operator control for the operator, for the capacitive sliders (223A, 223B/231C) which are located at the lower edge of the display and operator control component (200).

## Revendications

1. Tableau de bord (100), en particulier pour un véhicule automobile, présentant au moins une unité d'affichage et de commande qui présente au moins un élément d'affichage et de commande, le ou les éléments d'affichage et de commande (222A, 222B, 222C, 223C, 224A, 224B, 224C, 224D, 231C/232A, 232B/232C/232D) de la ou des unités d'affichage et de commande (211, 221, 222, 223, 224, 225, 231, 232) étant des éléments capacitifs d'affichage et de commande qui peuvent être activés en s'approchant d'une surface de commande (207) et/ou en touchant la surface de commande (207), **caractérisé en ce que**
la ou les unités d'affichage et de commande (211, 221, 222, 223, 224, 225, 231, 232) sont disposées dans un espace de montage (204, 205, 206) d'un composant d'affichage et de commande (200), entre un support de base (201) servant de partie inférieure et une partie supérieure configurée comme surface de commande (207) et reliée au support de base (201), le composant d'affichage et de commande (200) étant orienté vers l'espace intérieur du véhicule et étant placé dans ou sur le corps (110) du tableau de bord (100) pour ainsi recouvrir au moins une partie de la surface du corps (110) du tableau de bord (100) de telle sorte que le composant d'affichage et de commande (200) forme entre le côté avant du corps (110) du tableau de bord (100) et le côté arrière du composant d'affichage et de commande (200) un espace intermédiaire (208) en forme de fente.

2. Tableau de bord (100) selon la revendication 1, **caractérisé en ce que** le corps (110) du tableau de bord (100) peut être formé indépendamment des unités d'affichage et de commande (211, 221, 222, 223, 224, 225, 231, 232) disposées dans le composant d'affichage et de commande (200).

3. Tableau de bord (100) selon la revendication 1, **caractérisé en ce que** le composant d'affichage et de commande (200) comporte la partie inférieure qui sert de support de base (201) et la partie supérieure qui sert de surface de commande (207), la forme du support de base (201) servant de partie inférieure et/ou de la surface de commande (207) servant de partie supérieure étant adaptée au unités d'affichage et de commande (211, 221, 222, 223, 224, 225, 231, 232).

4. Tableau de bord (100) selon la revendication 3, **caractérisé en ce que** la forme du support de base (201) du composant d'affichage et de commande peut être sélectionnée et réalisée indépendamment du corps (110) du tableau de bord (100).

5. Tableau de bord (100) selon la revendication 1, **caractérisé en ce que** la forme d'au moins un élément d'affichage et de commande des unités d'affichage et de commande (211, 221, 222, 223, 224, 225, 231, 232) est adaptée à la forme de la surface de commande (207) du composant d'affichage et de commande (200).

6. Tableau de bord (100) selon la revendication 1, **caractérisé en ce que** les unités d'affichage et de commande (211, 221, 222, 223, 224, 225, 231, 232) sont disposés derrière la surface de commande (207) du composant d'affichage et de commande (200) qui forme une surface fermée pourvue de joints.

7. Tableau de bord (100) selon la revendication 6, **caractérisé en ce que** le composant d'affichage et de commande (200)
présente au moins une partie (210) d'affichage et de commande dans laquelle au moins une unité (211) d'affichage et de commande, à savoir un affichage combiné d'instruments, est disposée comme affichage librement programmable, et/ou
présente au moins une deuxième partie d'affichage et de commande (220) dans laquelle sont disposés au moins une unité (221) d'affichage et de commande, à savoir un affichage librement programmable, qui présente des informations, une navigation et/ou des unités de commande (224, 225) associées à la présentation d'informations et/ou de la navigation, au moins l'unité (223) de commande de la régulation de la climatisation et/ou au moins une unité (222) de commande faisant partie de la régulation de la climatisation, et/ou
présente au moins une partie (230) d'affichage et de commande dans laquelle sont disposées au moins une unité d'affichage et de commande (231) d'une installation de ventilation et/ou au moins une unité (232) de commande de l'éclairage.

8. Tableau de bord (100) selon la revendication 1, **caractérisé en ce que** les unités d'affichage et de commande sont configurées
comme affichages programmables (211, 221) ou
comme unités (222, 223, 224, 225, 231, 232) d'affichage et de commande constituées
d'au moins un élément (222A, 222B, 222C, 223C, 224A, 224B, 224C, 224D, 231C/232A, 232B/232C/232D) d'affichage et de commande ou
d'une combinaison d'au moins un élément (231C) d'affichage et de commande et d'au moins un autre élément de commande (231A, 231B) sans fonction d'affichage.

9. Tableau de bord (100) selon la revendication 1, **caractérisé en ce que** la surface de commande du composant d'affichage et de commande (200) est formée d'un matériau mince, transparent ou translucide, en particulier de matière synthétique, qui présente un revêtement sur son côté supérieur et/ou sur son côté intérieur.

10. Tableau de bord (100) selon la revendication 9, **caractérisé en ce que**
le revêtement réalisé au niveau des unités d'affichage et de commande (211, 221, 222, 223, 224, 225, 231, 232) est enlevé par des opérations mécaniques et/ou chimiques, manuelles ou automatiques, d'impressions, de revêtements ou d'enlèvements, pour former des surfaces transparentes ou translucides et/ou des symboles transparents ou translucides, ou n'est pas réalisé.

11. Tableau de bord (100) selon la revendication 10, **caractérisé en ce que**
le revêtement de la surface de commande (207) est un film non transparent à la lumière disposé sur un côté supérieur et/ou un côté intérieur de la surface de commande, le film n'étant pas appliqué au niveau des unités d'affichage et de commande (211, 221, 222, 223, 224, 225, 231, 232) ou étant enlevé dans des zones définies de telle sorte que la surface de commande présente des surfaces transparents ou translucides et/ou des symboles transparents ou translucides.

12. Tableau de bord (100) selon la revendication 11, **caractérisé en ce que**
au moins un affichage (211, 221) librement programmable est disposé sous la forme d'écran tactile derrière les surfaces transparentes ou translucides conservées ou formées du composant d'affichage et de commande (200) et/ou
derrière les symboles conservés ou formés du composant d'affichage et de commande (200), au moins une unité d'affichage et de commande (222, 223, 224, 225, 231, 232) qui présente au moins un élément (222A, 222B, 222C, 223C, 224A, 224B, 224C, 224D, 231C/232A, 232B/232C/232D) d'affichage et de commande doté de moyens d'éclairage est disposée.

13. Tableau de bord (100) selon la revendication 1, **caractérisé en ce que** la ou les unités (222, 224, 232) d'affichage ou de commande présentent au moins un élément (222A, 222B, 222C, 223C, 224A, 224B, 224C, 224D, 231C/232A, 232B/232C/232D) d'affichage et de commande qui présente la forme d'une touche capacitive,
**en ce que** la ou les unités (223, 231) d'affichage et de commande présentent au moins un élément (223A, 223B/231C) d'affichage et de commande présentant la forme d'un coulisseau capacitif et/ou
**en ce que** la ou les unités (225) d'affichage et de commande sont une combinaison d'une touche capacitive et d'un coulisseau capacitif.

14. Tableau de bord (100) selon la revendication 1, **caractérisé en ce que** des moulures de touches et des moulures de coulisseaux pour les touches capacitives (222A, 222B, 222C, 223C, 224A, 224B, 224C, 224D, 231C/232A, 232B/232C/232D) et/ou pour les coulisseaux capacitifs (223A, 223B/231C) sont disposés sur le côté avant de la surface de commande (207).

15. Tableau de bord (100) selon la revendication 14, **caractérisé en ce que** des moulures de coulisseaux sont disposées sur le côté arrière du composant d'affichage et de commande (200) dans le support de base (201) pour garantir à l'utilisateur une commande ergonomique des coulisseaux capacitifs (223A, 223B/231C) situés sur le bord inférieur du composant d'affichage et de commande (200) .
